# EUROPÄISCHE PATENTSCHRIFT

(11) **EP 1 517 946 B1**
(45) Veröffentlichungstag und Bekanntmachung des Hinweises auf die Patenterteilung: **04.10.2006**
(21) Anmeldenummer: 03738054.0
(22) Anmeldetag: 18.06.2003
(51) Int. Cl.: C08J 3/03, C08J 3/07, C08F 291/00, C08F 255/02

(54) **VERFAHREN ZUR HERSTELLUNG EINER WÄSSRIGEN POLYMERDISPERSION**
METHOD FOR THE PRODUCTION OF AN AQUEOUS POLYMER DISPERSION
PROCEDE DE PRODUCTION D'UNE DISPERSION POLYMERE AQUEUSE

(30) Priorität: 21.06.2002 DE 10227901; 28.08.2002 DE 10240188
(43) Veröffentlichungstag der Anmeldung: 30.03.2005
(73) Patentinhaber: BASF Aktiengesellschaft, 67056 Ludwigshafen (DE)
(72) Erfinder: MC KEE, Graham, Edmund, 67433 Neustadt (DE); LUINSTRA, Gerrit, 68165 Mannheim (DE); QUEISSER, Joachim, 68165 Mannheim (DE); SCHMID, Markus, 67146 Deidesheim (DE)
(86) Internationale Anmeldenummer: PCT/EP2003/006406
(87) Internationale Veröffentlichungsnummer: WO 2004/000917

(56) Entgegenhaltungen:
- WO-A-99/36444
- US-A- 6 028 135

## Beschreibung

Die vorliegende Erfindung betrifft ein Verfahren zur Herstellung einer wässrigen Polymerdispersion mit einer mittleren Teilchengröße (D50 Gewichtsmittel) von 0,01 bis 20 µm, welches dadurch gekennzeichnet ist, dass in einem ersten Schritt ungesättigte Monomere mit Hilfe von geeigneten Katalysatoren in den Monomeren selbst oder in einer Mischung der Monomere mit einem geeigneten Lösungsmittel derart einer Polymerisation unterworfen werden, dass die erhaltenen Polymeren mit mehr als 2 Gew.-%, bezogen auf die Polymermenge, an nichtumgesetzten Restmonomeren gequollen sind und in einem daran anschließenden Schritt diese Polymere mit Hilfe einer mechanischen Scherung mit 0,1 bis 30 Gew.-% Emulgatoren, bezogen auf die Polymermenge, und Wasser versetzt werden, wobei auch im letzten Schritt die erhaltenen Polymere nicht vollständig von den Restmonomeren getrennt werden und der Anteil der nicht entfernten Restmonomere bei mehr als 2 Gew.-% liegt.

Die US-A 6028135 offenbart ein Verfahren zur Herstellung wässriger Polymerdispersionen, welches dadurch gekennzeichnet ist, dass dem Polymerisationsgemisch eine Monomerenemulsion zudosiert wird, welche neben den Monomeren noch eine "initial polymer" genannte Saatlatex enthält.

Die WO-A 9936444 beschreibt ein Verfahren zur Stabilitätsverbesserung wässriger Polymerdispersionen gegenüber thermischen und/oder mechanischen Einwirkungen. Die Stabilitätsverbesserung wird dadurch erzielt, dass der betreffenden wässrigen Polymerdispersion ein Salz eines Bis-C4-C18-Alkylesters einer sulfonierten Dicarbonsäure mit 4 bis 8 Kohlenstoffatomen zugegeben wird.

Bei der Herstellung von wässrigen Polymerdispersionen treten häufig dann Schwierigkeiten auf, wenn auf das Gemisch aus Wasser, Polymer und Emulgator Scherkräfte einwirken müssen, um das viskose Polymer in Wasser zu dispergieren und um zu kleinen Teilchengrößen der Polymerdispersionen zu gelangen. Insbesondere bei Polymeren aus aliphatischen Olefinen beobachtet man erhebliche Probleme bei der Dispergierung in Wasser, welche u.a. auf die hohe Viskosität der Polyolefine zurückzuführen sind.

Aus der Veröffentlichung von Eckersley et al (Am. Chem. Soc., Div. Polymer Chemistry, 1997, 38 (2), Seiten 630 und 631) ist ein Verfahren zur Herstellung von Dispersionen aus Polyolefinen in Wasser bekannt, bei dem zunächst die Polymerteilchen in einem Lösungsmittel gelöst werden und anschließend in Wasser emulgiert werden. Bei diesem Verfahren ist es u.a. notwendig, nach der Herstellung des Polyolefins die nicht polymerisierten Restmonomere zu entfernen und nach dem Dispergierschritt das verwendete Lösungsmittel ebenfalls abzutrennen. Die Isolierung der Polyolefine gefolgt von einem weiteren zusätzlichen Dispergierschritt ist aufwendig und mit zusätzlichen Kosten verbunden.

Weiterhin wird in der DE-A 19821746 ein Verfahren zur Herstellung von Dispersionen aus gepfropftem Kautschuk in Wasser beschrieben. Hierbei werden zuerst Kautschuke aus Copolymeren des Ethylens mit anderen α-Olefinen und Dicyclopentadienen in kleine Stücke geschnitten, welche dann anschließend mit anderen Monomeren gepfropft werden, nachdem sie vorher in Wasser suspendiert wurden. Die Suspendierung in Wasser erfolgt dabei mit Hilfe eines Rührers, welcher nicht in der Lage ist, die Kautschukteilchen zu dispergieren. Diese werden dann zuerst in anderen Monomeren, insbesondere Styrol aufgequollen und abschließend mit diesen anderen Monomeren gepfropft. Aus der DE-A 19821746 geht u.a. weder hervor, wässrige Dispersionen aus solchen Polymeren herzustellen, noch, wie man zu möglichst kleinen dispergierten Polymerteilchen kommt. Außerdem ist das dort beschriebene Verfahren technisch recht aufwendig.

Der vorliegenden Erfindung lag daher die Aufgabe zugrunde, den geschilderten Nachteilen abzuhelfen und ein neues Verfahren zur Herstellung einer wässrigen Polymerdispersion zu entwickeln, mit dem dieses ohne großen Aufwand erhältlich ist und welches darüber hinaus es ermöglicht, auch Polymerdispersionen mit einer kleinen Teilchengröße bereitzustellen.

Demgemäß wurde das eingangs definierte Verfahren zur Herstellung einer wässrigen Polymerdispersion gefunden.

Bevorzugte Ausführungsformen sind u.a. den Unteransprüchen zu entnehmen.

Bei dem erfindungsgemäßen Verfahren zur Herstellung einer wässrigen Polymerdispersion aus ungesättigten Monomeren werden diese zunächst einer Polymerisation mit Hilfe von geeigneten Katalysatoren unterworfen.

Hierfür geeignete Katalysatoren sind die in der Technik bekannten Katalysatoren zur Herstellung von Polyolefinen, im wesentlichen heterogene oder homogene Katalysatoren, welche auch geträgert werden können.

Bei den heterogenen Katalysatoren zur Polymerisation der ungesättigten Monomere sind u.a. Zieglerkatalysatoren, Ziegler-Natta-Katalysatoren sowie Phillipskatalysatoren zu nennen. Zieglerkatalysatoren weisen neben einer titanhaltigen Feststoffkomponente a) noch Cokatalysatoren in Form von organischen Aluminiumverbindungen b) als aktive Bestandteile auf. Ziegler-Natta-Katalysatoren enthalten zusätzlich zu diesen Komponenten a) und b) noch Elektronendonorverbindungen c), insbesondere aliphatische Silanverbindungen, als sogenannte Stereomodifier. Phillipskatalysatoren, welche insbesondere zur Polymerisation von Ethylen eingesetzt werden, basieren im wesentlichen auf Chrom(VI)-oxiden, welche auf Kieselgel aufgebracht werden.

Geeignete homogene Katalysatoren sind vor allem organometallische Verbindungen von Übergangsmetallen der Gruppen 7 bis 10 des Periodensystems, welche gegebenenfalls auch verbrückt sein können und welche zusammen mit Cokatalysatoren eingesetzt werden können, wodurch letztlich neutrale oder kationische wirksame Verbindungen entstehen.

Derartige homogene Katalysatorsysteme sind u.a. aus den Publikationen M.K. Leclerc, R.M. Waymouth, Angew. Chem. Int. Ed. Engl. 1998, 37, Seite 922 ff oder W. Spalek, F. Küber, A. Winter, J. Rohrmann, B. Bachmann, M. Aulberg, V. Dolle, E.F. Paulus, Organometallics, 1994, 13, Seite 954 ff oder aus Soga, Chemical Reviews 2000, Band 100, Nr. 4 bekannt.

In einer Ausführungsform des erfindungsgemäßen Verfahrens können als Katalysatoren für die Polymerisation der ungesättigten Monomere organometallische Verbindungen enthaltend einen dreizähnigen Bisiminchelatliganden eingesetzt werden. Diese Verbindungen und ihre Herstellung werden beispielsweise in WO 01/07491, auf deren Lehre an dieser Stelle ausdrücklich verwiesen wird, und den darin zitierten Dokumenten beschrieben. Diese organometallischen Verbindungen weisen als ein wesentliches Strukturelement einen dreizähnigen Bisiminchelatliganden auf. Diese dreizähnigen Liganden können z.B. aus 2,6-Diacetylpyridin durch Umsetzung mit primären Aminen wie 2,6-Dibromanilin, 2,6-Dichloranilin, 2,6-Dibrom-4-methylphenylamin oder 2,6-Di-chlor-4-methylphenylamin erhalten werden (s.a. J. Org. Chem. 1967, 32, 3246).

Bevorzugte organometallische Verbindungen enthaltend einen dreizähnigen Bisiminchelatliganden sind:
2,6-Bis[1-(2,6-dichlorophenylimino)ethyl]pyridin-eisen(II)chlorid,
2,6-Bis[1-(2,6-dichloro-4-methylphenylimino)ethyl]pyridin-eisen-(II)chlorid,
2,6-Bis[1-(2,6-dibromophenylimino)ethyl]pyridin-eisen(II)chlorid,
2,6-Bis[1-(2,6-dibromo-4-methylphenylimino)ethyl]pyridin-eisen-(II)chlorid oder ein entsprechender -eisen(II)bromid- oder -cobalt(II)chlorid-Komplex.

In einer weiteren Ausführungsform des erfindungsgemäßen Verfahrens können als Katalysatoren für die Polymerisation des Olefinkautschuks Diimin-Palladiumkomplexe eingesetzt werden. Diese Verbindungen und ihre Herstellung werden beispielsweise in WO 00/77060, auf deren Lehre an dieser Stelle ausdrücklich verwiesen wird, und den darin zitierten Dokumenten beschrieben.

Bevorzugte Diimin-Palladiumkomplexe sind:
[Bis-N,N'-(2,6-diisopropylphenyl)-1,4-diaza-2,3-dimethyl-1,3-butadien]palladium-acetonitril-methyl-(tetrakis(3,5-bis-(trifluormethyl)phenyl)borat),
[Bis-N,N'-(2,6-diisopropylphenyl)-1,4-diaza-2,3-dimethyl-1,3-butadien]palladium-diethylether-methyl-(tetrakis(3,5-bis-(trifluormethyl)phenyl)borat),
[Bis-N,N'-(2,6-diisopropylphenyl) -1, 4-diaza-2,3-dimethyl-1,3-butadien] -palladium-η¹-O-methylcarboxypropyl-(tetrakis (3,5-bis-(trifluormethyl)phenyl))borat),
[Bis-N,N'-(2,6-diisopropylphenyl)-1,4-diaza-1,3-butadien]palladium-η¹-O-methylcarboxypropyl-(tetrakis(3,5-bis-(trifluormethyl)phenyl)borat),
[Bis-N,N'-(1-naphthyl)-1,4-diaza-2,3-dimethyl-1,3-butadien]pallad ium-η¹-O-methylcarboxypropyl-(tetrakis(3,5-bis-(trifluormethyl)phenyl))borat),
[Bis-N,N'-(2,6-diisopropylphenyl)-1,4-diaza-2,3-dimethyl-1,3-butadien]palladium-methylchlorid oder
[Bis-N,N'-(2,6-diisopropylphenyl)-1,4-diaza-1,3-butadien]palladium-methyl-chorid.

In einer weiteren Ausführungsform des erfindungsgemäßen Verfahrens können als Katalysatoren für die Polymerisation des Olefinkautschuks Zirconocen-Komplexe eingesetzt werden. Diese Verbindungen und ihre Herstellung werden beispielsweise in WO 00/22010, auf deren Lehre an dieser Stelle ausdrücklich verwiesen wird, und den darin zitierten Dokumenten beschrieben.

Bevorzugte Zirconocen-Komplexe sind:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis (indenyl) -zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis (2-ethylbenzindenyl) zirkoniumdichlorid,
(2-Isopropyl-4-(4-tert.butylphenyl)indenyl)(2-methyl-4-(4-tert.butylphenyl)indenyl)dimethylsilylzirconiumdichlorid
und die entsprechenden Dimethylzirkoniumverbindungen.

In einer weiteren Ausführungsform des erfindungsgemäßen Verfahrens können als Katalysatoren für die Polymerisation des Olefinkautschuks über zwei O-Atome, zwei N-Atome oder ein O- und ein N-Atom gebundene organometallische Chelat-Komplexe von Ti, Zr, Hf, V, Nb, Ta, Cr, Mo, W oder den Seltenerdmetallen eingesetzt werden. Diese Verbindungen und ihre Herstellung werden beispielsweise in WO 00/71593, auf deren Lehre an dieser Stelle ausdrücklich verwiesen wird, und den darin zitierten Dokumenten beschrieben.

Bevorzugte Chelat-Komplexe dieser Art sind:
Bis (2, 2, 6, 6-Tetramethylheptan-3, 5-dionato) titan (IV) diisopropoxid
und Bis(2,2,6,6-Tetramethylheptan-3,5-dionato)titan(IV)dichlorid.

Im Rahmen der erfindungsgemäßen Verfahren können auch Cokatalysatoren eingesetzt werden; geeignete Cokatalysatoren sind bekannt. Bevorzugt wird ein Cokatalysator, der kein ionisch gebundenes Halogen enthält, eingesetzt. Beispielsweise eignen sich offenkettige oder cyclische Alumoxanverbihdungen, wie Methylaluminoxan (MAO), Borane, vorzugsweise mit Fluor oder Fluoralkyl-Gruppen substituierte Phenylborane, wie Tris(pentafluorphenyl)boran oder Borate, wie Tetrakis(pentafluorphen)borat mit nichtkoordinierenden Gegenionen, vorzugsweise N,N-Dimethylanilinium. Weitere geeignete Cokatalysatoren sind u.a. Phosphane oder Phosphorane.

Der Katalysator wird in der Regel in einem Molverhältnis von 1 : 100000 bis 1 : 1000, bezogen auf das Metall des Katalysators zu dem ungesättigten Monomeren eingesetzt.

Das Molverhältnis von Katalysator zu Cokatalysator beträgt im allgemeinen 1 : 0,01 bis 1 : 10000, insbesondere 1 : 0,1 bis 1 : 1000, bei Organoaluminiumverbindungen als Cokatalysator bevorzugt 1 : 10 bis 1 : 10000, besonders bevorzugt 1 : 20 bis 1 : 2000, insbesondere 1 : 30 bis 1 : 1000. Im Falle von Borverbindungen als Cokatalysator beträgt das Molverhältnis Katalysator zu Cokatalysator bevorzugt 1 : 0,9 bis 1 : 2.

Die im erfindungsgemäßen Verfahren eingesetzten Katalysatoren können auch geträgert sein. Als Träger können insbesondere anorganische oxide eingesetzt werden, beispielsweise Oxide des Siliciums, des Aluminiums, des Titans oder eines Metalls der I. oder der II. Hauptgruppe des Periodensystems. Als besonders bevorzugtes Oxid wird neben Aluminiumoxid oder Magnesiumoxid vor allem Siliciumoxid (Kieselgel) verwendet. Derartige Trägersubstanzen weisen üblicherweise mittlere Teilchengrößen von 1 bis 1000 µm, insbesondere von 5 bis 200 µm auf.

Als ungesättigte Monomere eignen sich im erfindungsgemäßen Verfahren vor allem aliphatische Olefine. Daneben können als ungesättigte Monomere auch vinylaromatische Monomere sowie Acrylsäure, Methacrylsäure oder deren Derivate eingesetzt werden.

Als aliphatische Olefine im Sinne der vorliegenden Erfindung kommen lineare oder verzweigte Kohlenwasserstoffe mit zwei bis 26 Kohlenstoffatomen und einer, bevorzugt terminalen, Doppelbindung in Betracht. Geeignete α-Olefine sind zum Beispiel Ethen, Propen, 1-Buten, i-Buten, 1-Penten, 3-Methyl- oder 4-Methyl-1-penten, 1-Hexen, 3-, 4- oder 5-Methyl-1-hexen, 1-Hepten, 1-Octen, 1-Decen, 1-Dodecen, 1-Dodecadecen, 1-Hexadecen oder 1-Eicosen.

Für die Homopolymerisation von α-Olefinen gemäß dem erfindungsgemäßen Verfahren werden bevorzugt Ethen und Propen sowie ebenfalls bevorzugt 1-Buten, i-Buten, 1-Penten, 1-Hexen oder 1-Octen eingesetzt.

Bei der Copolymerisation von α-Olefinen kann auf beliebige binäre, ternäre oder höhere Gemische aus den vorgenannten α-Olefinen zurückgegriffen werden. Binäre Polymerisationsgemische können beispielsweise als Ausgangsmonomere Ethen und Propen, 1-Buten, i-Buten, 1-Penten, 1-Hexen oder 1-Octen enthalten. Ebenfalls geeignet sind binäre Gemische auf der Basis von Propen und 1-Buten, i-Buten, 1-Penten oder 1-Hexen sowie Gemische aus 1-Buten mit i-Buten, 1-Penten oder 1-Hexen.

Besonders geeignet unter den binären Ausgangsgemischen sind Ethen/Propen, Ethen/1-Buten, Ethen/1-Penten, Ethen/1-Hexen und 1-Octene.

Geeignete ternäre Ausgangsgemische setzen sich beispielsweise zusammen aus Ethen und Propen sowie 1-Buten, i-Buten, 1-Penten, 1-Hexen oder 1-Octen. Geeignet sind ebenfalls Gemische aus Ethen und 1-Buten sowie als drittem Comonomer 1-Penten, 1-Hexen oder 1-Octen. Bevorzugt unter den ternären α-Olefingemischen sind solche aus Ethen, Propen und 1-Buten sowie aus Ethen, Propen und 1-Hexen.

Die vorab genannten aliphatischen Olefine können auch als Mischungen mit anderen Monomeren eingesetzt werden, die zwei oder mehr konjugierte oder nicht-konjugierte Doppelbindungen enthalten. Der Gehalt an anderen Monomeren in diesen Mischungen bezogen auf die Gesamtmasse aliphatischer Olefine kann bis zu 50 Gew.-%, bevorzugt bis zu 15 Gew.-%, besonders bevorzugt bis zu 10 Gew.-%, insbesondere bis zu 7 Gew.-% betragen. Solche anderen Monomere sind beispielsweise Butadien, Isopren, 2,3-Dimethylbutadien, 1,3-Pentadien, 1,3-Hexadien, 1,4-Hexadien, 1,5-Hexadiene, Dicyclopentadien, Norbornen, Piperylen, Cyclo-Diene wie 1,5-Cyclooctadien oder deren Mischungen. Bevorzugt kommen als andere Monomere in diesen Mischungen Diene mit nicht-konjugierten Doppelbindungen in Betracht; in diesen Fällen wird eine Doppelbindung zur Einpolymerisation in den Olefinkautschuk genutzt, die zweite Doppelbindung bleibt für eine ggf. in einem späteren Verfahrensschritt gewünschte Pfropfungsreaktion erhalten.

Als vinylaromatische Monomere für das erfindungsgemäße Verfahren sind beispielsweise Styrol, α-Methylstyrol, p-Methylstyrol, Ethylstyrol, tert.-Butylstyrol, Vinyltoluol oder 1,1-Diphenylethylen oder Mischungen davon geeignet. Besonders bevorzugt ist Styrol.

Weiter geeignete ungesättigte Monomere sind u.a. Acrylsäure, Methacrylsäure sowie deren Derivate, insbesondere deren Anhydride, Amide, Nitrile oder deren Ester. Hierbei sind insbesondere die Ester der Acrylsäure oder der Methacrylsäure von C₁-C₃₀-Alkoholen, vorzugsweise n-Butylacrylat, iso-Butylacrylat, Ethylacrylat, Ethylhexylacrylat, Methylacrylat, Methylmethacrylat oder n-Butylmethacrylat, sowie Mischungen derartiger Monomere zu nennen.

Die im erfindungsgemäßen Verfahren eingesetzten Monomere weisen vorzugsweise einen Siedepunkt von weniger als 100°C, besonders bevorzugt von weniger als 70°C und insbesondere von weniger als 40°C auf.

Das erfindungsgemäße Verfahren ist u.a. dadurch gekennzeichnet, dass die durch Polymerisation mit geeigneten Katalysatoren erhaltenen Polymere mit der gesamten Menge oder einem Teil der nicht umgesetzten Restmonomere gequollen sind. Der Anteil der nicht entfernten Restmonomere, in welchem die Polymere aufgequollen werden, liegt bevorzugt bei mehr als 2 Gew.-%, vorzugsweise bei mehr als 5 Gew.-%, insbesondere bei mehr als 10 Gew.-%, bezogen auf die Menge des Polymeren. Das Vorliegen der nichtpolymerisierten Restmonomere bewirkt u.a. eine Verringerung der Viskosität des erhaltenen Polymeren.

Die Polymerisation der ungesättigten Monomere kann entweder in diesen Monomeren selbst oder aber in einer Mischung dieser Monomeren mit geeigneten Lösungsmitteln erfolgen. Als Lösungsmittel eignen sich aliphatische, cycloaliphatische oder aromatische Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Wird eine weitere Lösungsmittelkomponente verwendet, so liegt in der Regel der Anteil der ungesättigten Monomere an der Gesamtlösungsmittelmenge im Bereich von 80 bis 100 Gew.-%, bevorzugt von 85 bis 100 Gew.-%.

Die Polymerisation wird vorzugsweise bei Temperaturen zwischen 0 und 150 °C, insbesondere zwischen 10 und 120 °C durchgeführt. Die Polymerisation kann auch mit geeigneten Reglern, beispielsweise mit Wasserstoff oder mit Aluminiumhydrid, wie Dibutylaluminiumhydrid, kontrolliert werden.

Im Anschluß an die Herstellung der Polymere, welche mit der gesamten Menge oder einem Teil der nicht umgesetzten Restmonomere gequollen sind, versetzt man nach dem erfindungsgemäßen Verfahren im letzten Schritt die erhaltene Quellung zusammen mit Emulgatoren und Wasser, wobei auch in diesem letzten Schritt die erhaltenen Polymere nicht vollständig von den Restmonomeren getrennt werden.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht. Bezogen auf die Menge an Polymeren werden vorzugsweise 0,1 bis 30 Gew.-%, insbesondere 0,3 bis 25 Gew.-% dieser Substanzen eingesetzt.

Auch im letzten Schritt werden die erhaltenen Polymere nicht vollständig von den Restmonomeren getrennt, d.h. bezogen auf die Menge des Polymeren, liegt der Anteil der nicht entfernten Restmonomere noch bei mehr als 2 Gew.-%, insbesondere noch bei mehr als 5 Gew.-%, ganz besonders bei mehr als 10 Gew.-%.

Die Herstellung der Polymerdispersion erfolgt mit Hilfe einer mechanischen Scherung. Auf diese Weise ist es möglich, die Teilchengröße der Polymerdispersion entsprechend einzustellen.

Die mechanische Scherung kann u.a. mit Hilfe eines sogenannten Ultraturrax, mit Hilfe eines schnell drehenden Rührers oder eines Ultraschallstabes erfolgen.

Es ist auch möglich, den ersten Schritt zur Herstellung der Polymerdispersion in Anwesenheit eines geeigneten Ultraschallgeräts (Ultraturrax, Ultraschallstab) oder eines schnell drehenden Rührers durchzuführen und danach in einem zweiten Schritt einen Hochdruckhomogenisator zu verwenden.

Die Glastemperatur der erhaltenen Polymere von ungesättigten Monomeren liegen üblicherweise im Bereich von - 100 bis + 100 °C, insbesondere im Bereich von - 90 bis + 80 °C.

Das erfindungsgemäße Verfahren kann weiterhin auch in der Weise abgewandelt werden, dass die erhaltenen Polymere aus ungesättigten Monomeren noch einem zweiten Polymerisationsschritt unterworfen werden, bei welchem den Polymeren weitere Monomere aufgepfropft werden. Derartige weitere Monomere, welche den Polymeren aufgepfropft werden, können vor, während oder nach dem Zeitpunkt, an dem die erhaltene Quellung zusammen mit Emulgatoren mit Wasser versetzt wird, den Polymeren zugegeben werden. Bevorzugt werden die weiteren Monomere vor dem besagten Zeitpunkt zugegeben, wobei die hinzugefügten weiteren Monomere des zweiten Schritts dann auch als Lösungsmittel fungieren.

Geeignete weitere Monomere, welche dem Polymeren aufgepfropft werden können sind insbesondere vinylaromatische Monomere, Acrylnitril oder aber Acrylsäure, Methacrylsäure sowie deren Derivate.

Als vinylaromatische Monomere für das erfindungsgemäße Verfahren sind beispielsweise Styrol, α-Methylstyrol, p-Methylstyrol, Ethylstyrol, tert.-Butylstyrol, Vinyltoluol oder 1,1-Diphenylethylen oder Mischungen davon geeignet. Besonders bevorzugt sind Styrol und α-Methylstyrol.

Als weitere Monomere können u.a. Acrylsäure, Methacrylsäure, sowie deren Derivate, insbesondere deren Anhydride, Amide, Nitrile oder deren Ester verwendet werden. Hierbei sind insbesondere die Ester der Acrylsäure oder der Methacrylsäure von C₁-C₃₀-Alkoholen, vorzugsweise n-Butylacrylat, iso-Butylacrylat, Ethylacrylat, Ethylhexylacrylat, Methylacrylat, Methylmethacrylat oder n-Butylmethacrylat, sowie Mischungen derartiger Monomere zu nennen. Weitere geeignete Verbindungen sind vor allem Glycidylacrylat, Glycidylmethacrylat, Acrylamid oder Methacrylamid.

Die weiteren Monomere, welche dem Polymeren aufgepfropft werden, haben ebenso wie die ungesättigten Monomere des ersten Polymerisationsschritts u.a. die Aufgabe, die Viskosität der Polymere zu verringern. Die weiteren Monomere können bereits während der Entstehung der Polymere vorhanden sein oder aber nach Beendigung der Polymerisation hinzugefügt werden. Falls die Monomere bereits während der Bildung der Polymere vorhanden sind, unterstützen sie die Dispergierung der Polymere in der Lösung. Die weiteren Monomere können auch mitpolymerisiert werden. Es empfiehlt sich, die weiteren Monomere zu einem Zeitpunkt dem Polymeren zum Zwecke der Pfropfung zuzuführen, an dem die ungesättigten Monomere noch nicht entfernt worden sind.

Falls die aus den wässrigen Polymerdispersionen erhältlichen Polymerpartikel als Schlagzähmodifizier dienen sollen, empfiehlt es sich als weitere Monomere (Pfropfmonomere) Styrol, Acrylnitril oder Methylmethacrylat einzusetzen. Falls die wässrigen Polymerdispersionen als Beschichtungen für Anstriche verwendet werden sollen, dann ist es vorteilhaft, diese mit geeigneten Vernetzern zu versehen, beispielsweise mit Acrylamid-N-alkylolen, Methacrylamid-N-alkylolen, wie z.B. Acrylamid-Methylolmethylether, N-methylol-acrylamid, Methacrylamid-methylolmethylether, Butadien, Isopren, Dicyclopentadien oder Butandioldiacrylat. Hierfür geeignet sind außerdem Anhydridgruppen oder acide Epoxygruppen, die mit Kationen wie Ca²⁺ oder Mg²⁺ vernetzt werden können.

Ebenso wie die ungesättigten Monomere können auch die weiteren Monomere (Pfropfmonomere) dazu verwendet werden, einerseits die Viskosität der erhaltenen Polymere zu verringern und andererseits kleinere Teilchengrößen zu erhalten. ,

Bezogen auf die gesamte Menge aus ungesättigten Monomeren und Pfropfmonomeren liegt die Menge an Pfropfmonomeren üblicherweise im Bereich von 0 bis 90 Gew.-%, insbesondere im Bereich von 0 bis 60 Gew.-% und besonders bevorzugt im Bereich von 0 bis 50 Gew.-%.

Die Pfropfreaktion wird üblicherweise radikalisch durchgeführt. Die radikalische Polymerisation kann sowohl thermisch, beispielsweise für Styrol, als auch mit Hilfe von geeigneten radikalischen Initiatoren gestartet werden.

Als radikalische Initiatoren kommen Peroxide, beispielsweise Diacyl-, Dialkyl- Diarylperoxide, Peroxyester, Peroxidicarbonate, Peroxiketal, Peroxosulfate, Hydroperoxide oder Azoverbindungen in Betracht. Bevorzugt verwendet man Dibenzoylperoxid, 1,1-Di-tert.-butylperoxo-cyclohexan, Dicumylperoxid, Dilaurylperoxid, Azobisisobutyronitril, sowie Natrium-, Kalium- oder Ammoniumpersulfate.

Als Hilfsmittel können Molekulargewichtsregler wie z.B. dimeres α-Methylstyrol, Mercaptane wie n-Dodecylmercaptan oder tert.-Dodecylmercaptan, Kettenverzweigungsmittel, Stabilisatoren oder Entformungsmittel zugesetzt werden.

Die Pfropfreaktion erfolgt üblicherweise bei Temperaturen von 5 bis 150 °C, insbesondere von 10 bis 100 °C, besonders bevorzugt bei 20 bis 90 °C.

Während der Quellung und der Zugabe der Emulgatoren empfiehlt es sich, Temperaturen von 0 bis 300°C, insbesondere 10 bis 250°C und besonders bevorzugt 20 bis 220°C einzustellen.

Um die Polymere zusammen mit den Monomeren in eine stabile Dispersion zu bringen, können übliche Apparaturen wie zum Beispiel Rotor-Stator-Maschinen (Ultra-Turrax oder Disparx der Firma IKA, Stauffen), ähnliche Aggregate der Firmen Cavitron oder Supaton, oder aber Apparate wie in der US-A 5,816,700 beschrieben, eingesetzt werden. Weiterhin sind hierfür geeignet intensiv mischende Inline-Mischer, schnelllaufende Einwellenmischer mit unterschiedlichen Misch- und Förderzonen (DE-A 3903007) oder aber gleichsinnig rotierende Zweischneckenmaschinen, sowie Hochdruckhomogenisatoren.

Das erfindungsgemäße Verfahren kann auch in der Weise ausgestaltet werden, dass der Druck nach Beendigung der Dispergierung der Polymere in Wasser ähnlich hoch ist wie der vor der Dispergierung. Es kann sich auch empfehlen, die weiteren Monomere, welche dem Polymeren aufgepfropft werden, vor dem Zeitpunkt zuzugeben, an dem die erhaltene Quellung zusammen mit Emulgatoren mit Wasser versetzt wird.

Weiterhin kann die nach dem erfindungsgemäßen Verfahren erhaltene Quellung zusammen mit Emulgatoren sowie weiteren Polymeren, Füllstoffen, Hilfsstoffen und Pigmenten mit Wasser versetzt werden.

Es ist auch möglich, der wässrigen Polymerdispersion zusätzlich Verträglichkeitsvermittler, welche die Morphologie zwischen den Polymeren und den auf ihnen aufgepfropften Monomeren ändern, zuzusetzen. Die Verträglichkeitsvermitteler können auch die Verteilung und die Morphologie der weiteren Polymeren, Füllstoffe, Hilfsstoffe und Pigmente positiv beeinflussen.

Das erfindungsgemäße Verfahren ist ohne großen Aufwand leicht durchzuführen und ermöglicht es u.a., auch Polymerdispersionen mit einer kleinen Teilchengröße herzustellen. Darüber hinaus eignet es sich vor allem zur Herstellung von wässrigen Dispersionen von Polyolefinen, welche sonst nur sehr schwer zugänglich sind.

Die nach dem erfindungsgemäßen Verfahren erhaltenen wässrigen Polymerdispersionen weisen vorzugsweise eine mittlere Teilchengröße (D 50 Gewichtsmittel) von 0,01 bis 20 µm, insbesondere von 0,03 bis 15 µm und besonders bevorzugt von weniger als 5 µm auf. Falls sie als Filme oder Schlagzähmodifizierer eingesetzt werden, haben sie bevorzugt mittlere Teilchengrößen von weniger als 2 µm, insbesondere mittlere Teilchengrößen von weniger als 1 µm.

Das D 50 Gewichtsmittel steht für den Durchmesser, bei dem 50 Gew.-% der Teilchen einen Durchmesser oberhalb von diesem Wert und 50 Gew.-% der Teilchen einem Durchmesser unterhalb von diesem Wert aufweisen.

Die Teilchengröße lassen sich mit Lichtstreumethoden bestimmen. Einen Überblick findet man in D. Distler (Herausgeber) "Wäßrige Polymerdispersionen", Wiley-VCH Verlag, 1. Auflage, 1999, Kapitel 4.

Die nach den erfindungsgemäßen Verfahren hergestellten wässrigen Dispersionen lassen sich in zahlreichen Anwendungen vorteilhaft verwenden, wie beispielsweise Papieranwendungen wie Papierstreicherei oder Oberflächenleimung, weiterhin Anstrichen und Lacken, Bauchemikalien, Klebrohstoffe, Formschäume, Textil- und Lederapplikationen, Teppichrückenbeschichtungen, Matratzen oder pharmazeutischen Anwendungen. Die erhaltenen Poymerdispersionen können auch als Mattierungsmittel eingesetzt werden. Es ist auch möglich, die erhaltenen Polymerdispersion zusammen mit anderen Polymeren einzusetzen.

### Beispiel

### A. Herstellung eines Ethen/Propen-Lösungspolymeren

10 mg Bis(n-Butylcyclopentadienyl)zirkoniumdichlorid wurden in 10 ml wasser- und sauerstofffreiem Toluol (Fa. Aldrich) in einem Schlenkrohr unter Argon Schutzgas gelöst und bei Raumtemperatur mit 16 ml MAO Lösung (Methylaluminoxan, 10 % in Toluol, Fa. Aldrich) versetzt und für 5 min gerührt.

Ein ausgeheizter, inertisierter Edelstahlautoklav (0,3 L) mit elektrischer Heizung und mechanischem Rührer wurde bei Raumtemperatur mit 30 g Propen befüllt. Danach wurde Ethen bis zu einem Druck von 20 bar aufgepresst. Nachdem die Mischung 5 min gerührt wurde, förderte man die Katalysatorlösung mit einer HPLC Pumpe in 2 min in den Autoklaven. Das Gemisch wurde auf 50°C geheizt und nach 2 h auf Raumtemperatur abgekühlt. Beim Entspannen auf Normaldruck erhält man ein noch mit Propen gequollenes, viskoses Polymer.

### B. Herstellung einer Polyethylen-co-Propylen Dispersion

Das aus dem Schritt A erhaltene gequollene Copolymer wurde in einen 500 ml Kolben mit Turrax (Fa.) überführt. Zu diesem gab man bei Raumtemperatur ein Gemisch aus 100 ml Wasser und 6 g Disponil FES 77 (Emulgator der Fa. Henkel) in 10 min unter intensivem Rühren zu. Die Teilchengröße entstandenen Suspension wurde unter einem Lichtmikroskop vermessen und betrug ca. 10 µm. Die Suspension wurde danach bei Raumtemperatur drei mal mit Hilfe eines Hochdruckhomogenisators (Typ NS 1001 L Panda der Fa. Niro Soavi) homogenisiert. Man erhielt eine weiße Dispersion mit einem Feststoffgehalt von 13 %. Der mittlere Teilchendurchmesser der Copolymerisatdispersion wurde durch dynamische Lichtstreuung auf 220 nm bestimmt. Die Filtration der Dispersion über ein 45 µm Filtergewebe ergab einen Kuagulatgehalt von 0,2 %. Die Dispersion ist über Wochen stabil ohne aufzurahmen oder sich abzusetzen.

### C. Herstellung einer Polypropylen Dispersion

5 mg des Zirkoniumkomplexes 1 (Herstellung: B. Rieger et al, Z. Naturforsch., Part B 1994, 49, 451.) wurden in einem Schlenkrohr unter Argon Schutzgas bei Raumtemperatur in 5 ml einer toluolischen Lösung von MAO (Methylaluminoxan, 10 % Fa. Aldrich GmbH) gelöst und 5 min bei 20 °C gerührt.

Ein ausgeheizter, inertisierter Edelstahlautoklav (1,2 L) mit elektrischer Heizung, einem Ölgefüllten Heiz/Kühlmantel und mechanischem Rührer wurde bei Raumtemperatur mit 200 g Propen und 200 g iso-Butan befüllt. Nachdem die Mischung auf 40 °C erhitzt wurde dosierte man per HPLC Pumpe die Katalysatorlösung in 1 min in den Autoklaven. Nach 5 h Stunden bei 40 °C wurde die Reaktion durch Aufpressen von Kohlendioxid bis 20 bar beendet.

In einem zweiten Rührbehälter aus Stahl (2,5 L) mit mechnaischem Rührer wurde eine Lösung von 25 g n-Dodecylbenzolsulfonat Natriumsalz und 100 g Disponil FES 77 (30% in Wasser, Fa. Cognis) in 500 g Wasser vorgelegt und auf 80 °C temperiert. Über ein Steigrohr wurde die Polypropylenlösung in den größeren Rührbehälter mit Hilfe von Stickstoffüberdruck umgepresst und bei 2000 UPM emulgiert. Aus Grobemulsion wurde durch sequenzielles passieren durch einen dynamischen Mischer (15000 UPM, Typ MT5000, Fa. Kinematica) und einem Hochdruckhomogenisator bei 80°C (Typ NS 1001 L Panda der Fa. Niro Soavi) eine Feinemulsion hergestellt, die in eine Stahlbehälter (5 L) geleitet wurde. Nach entspannen des Gemischs auf Normaldruck, wurde die Dispersion durch Einleitung von Stickstoff über eine eingebaute Fritte vom restlichen iso-Butan befreit. Man erhielt eine Dispersion mit 23 % Feststoffgehalt. Der mittlere Teilchendurchmesser betrug 290 nm. Durch Trocknen von 5 g Dispersion bei Raumtemperatur in einem Polyethylenschälchen erhielt man einen elastischen Polypropylenfilm. Aus dem getrockneten Film ermittelte man das Molekulargewicht per GPC mit massengemitteltem Molgewicht von 180000 g/mol (Polydispersität 1,9).

## Patentansprüche

1. Verfahren zur Herstellung einer wässrigen Polymerdispersion mit einer mittleren Teilchengröße (D50 Gewichtsmittel) von 0,01 bis 20 µm, **dadurch gekennzeichnet, dass** in einem ersten Schritt ungesättigte Monomere mit Hilfe von geeigneten Katalysatoren in den Monomeren selbst oder in einer Mischung der Monomere mit einem geeigneten Lösungsmittel derart einer Polymerisation unterworfen werden, dass die erhaltenen Polymeren mit mehr als 2 Gew.-%, bezogen auf die Polymermenge, an nicht umgesetzten Restmonomeren gequollen sind und in einem daran anschließenden Schritt diese Polymere mit Hilfe einer mechanischen Scherung mit 0,1 bis 30 Gew.-% Emulgatoren, bezogen auf die Polymermenge, und Wasser versetzt werden, wobei auch im letzten Schritt die erhaltenen Polymere nicht vollständig von den Restmonomeren getrennt werden und der Anteil der nicht entfernten Restmonomere bei mehr als 2 Gew.-% liegt.

2. Verfahren nach Anspruch 1, **dadurch gekennzeichnet, dass** man als ungesättigte Monomere solche Monomere.einsetzt, die einen Siedepunkt von weniger als 100°C aufweisen.

3. Verfahren nach den Ansprüchen 1 oder 2, **dadurch gekennzeichnet, dass** man als ungesättigte Monomere aliphatische Olefine verwendet.

4. Verfahren nach den Ansprüchen 1 oder 2, **dadurch gekennzeichnet, dass** man als ungesättigte Monomere Acrylsäure, Methacrylsäure oder deren Derivate verwendet.

5. Verfahren nach den Ansprüchen 1 bis 4, **dadurch gekennzeichnet, dass** die Herstellung der Polymere mit Hilfe einer organometallischen Verbindung erfolgt.

6. Verfahren nach den Ansprüchen 1 bis 5, **dadurch gekennzeichnet, dass** die erhaltenen Polymere einem weiteren Polymerisationsschritt unterworfen werden, bei welchem den Polymeren weitere Monomere aufgepfropft werden.

7. Verfahren nach Anspruch 6, **dadurch gekennzeichnet, dass** die weiteren Monomere, welche dem Polymeren aufgepfropft werden, vor dem Zeitpunkt zugegeben werden, an dem die erhaltene Quellung zusammen mit Emulgatoren mit Wasser versetzt wird.

8. Verfahren nach den Ansprüchen 1 bis 7, wobei die erhaltene Quellung zusammen mit Emulgatoren sowie weiteren Polymeren, Füllstoffen, Hilfsstoffen und Pigmenten mit Wasser versetzt wird.

9. Verfahren nach den Ansprüchen 6 bis 8, **dadurch gekennzeichnet, dass** die erhaltene Quellung zusammen mit Emulgatoren sowie mit Verträglichkeitsvermittlern, welche die Morphologie zwischen den Polymeren und anderen ebenfalls hinzugefügten Substanzen verbessern und mit Wasser versetzt wird.

10. Verfahren nach den Ansprüchen 6 bis 9, **dadurch gekennzeichnet, dass** ein solcher Verträglichkeitsvermittler gewählt wird, der die Morphologie zwischen den erhaltenen Polymeren und den aufgepfropften Monomeren ändert.

11. Verfahren nach den Ansprüchen 6 bis 10, **dadurch gekennzeichnet, dass** als weitere Monomere, welche dem Polymer aufgepfropft werden, vinylaromatische Monomere, Acrylnitril oder Methylmethacrylat verwendet werden.

12. Verfahren nach den Ansprüchen 9 bis 11, **dadurch gekennzeichnet, dass** die Verträglichkeitsvermittler entweder vor oder während des Zeitpunktes hinzugefügt werden, an dem die erhaltene Quellung zusammen mit Emulgatoren mit Wasser versetzt wird.

## Claims

1. A process for preparing an aqueous polymer dispersion having a mean particle size (D50 weight average) of from 0.01 to 20 µm, wherein, in a first step, unsaturated monomers are subjected to a polymerization with the aid of suitable catalysts in the monomers themselves or in a mixture of the monomers with a suitable solvent in such a way that the polymers obtained are swollen with more than 2% by weight, based on the amount of polymer, of unreacted residual monomers and, in a subsequent step, these polymers are admixed with the aid of mechanical shear with from 0.1 to 30% by weight of emulsifiers, based on the amount of polymer, and water, with, even in the last step, the polymers obtained not being separated completely from the residual monomers and the proportion of residual monomers which has not been removed being greater than 2% by weight.

2. The process according to claim 1, wherein monomers having a boiling point of less than 100°C are used as unsaturated monomers.

3. The process according to claim 1 or 2, wherein aliphatic olefins are used as unsaturated monomers.

4. The process according to claim 1 or 2, wherein acrylic acid, methacrylic acid or derivatives thereof are used as unsaturated monomers.

5. The process according to any of claims 1 to 4, wherein the preparation of the polymers is carried out with the aid of an organometallic compound.

6. The process according to any of claims 1 to 5, wherein the polymers obtained are subjected to a further polymerization step in which further monomers are grafted onto the polymers.

7. The process according to claim 6, wherein the further monomers which are grafted onto the polymer are added before the point in time at which the swollen polymer obtained is admixed with emulsifiers and water.

8. The process according to any of claims 1 to 7, wherein the swollen polymer obtained is admixed with emulsifiers and further polymers, fillers, auxiliaries and pigments together with water.

9. The process according to any of claims 6 to 8, wherein the swollen polymer obtained is admixed with emulsifiers and also compatibilizers which improve the morphology between the polymers and other substances which are likewise added together with water.

10. The process according to any of claims 6 to 9, wherein a compatibilizer which alters the morphology between the polymers obtained and the monomers grafted onto it is chosen.

11. The process according to any of claims 6 to 10, wherein vinylaromatic monomers, acrylonitrile or methyl methacrylate are used as further monomers which are grafted onto the polymer.

12. The process according to any of claims 9 to 11, wherein the compatibilizers are added either before or during the point in time at which the swollen polymer obtained is admixed with emulsifiers and water.

## Revendications

1. Procédé de préparation d'une dispersion polymère aqueuse ayant une grosseur moyenne de particules (D50 moyenne en poids) de 0,01 à 20 µm, **caractérisé en ce que**, lors d'une première étape les monomères insaturés sont soumis à une polymérisation à l'aide de catalyseurs appropriés dans les monomères eux-mêmes ou dans un mélange de monomères avec un solvant adéquat, de telle sorte que les polymères obtenus ayant plus de 2% en poids, sur base de la quantité de polymère, de monomères résiduels non réagis sont gonflés et dans une étape consécutive, ces polymères sont mélangés, au moyen d'un cisaillement mécanique, avec 0,1 à 30% en poids d'émulsionnants, sur base de la quantité de polymère, et de l'eau, les polymères obtenus n'étant pas entièrement séparés des monomères résiduels, même dans la dernière étape, et la proportion des monomères résiduels non éliminés étant située à plus de 2% en poids.

2. Procédé selon la revendication 1, **caractérisé en ce qu'**on utilise comme monomères insaturés des monomères qui présentent un point d'ébullition inférieur à 100°C.

3. Procédé selon les revendications 1 ou 2, **caractérisé en ce qu'**on utilise comme monomères insaturés des oléfines aliphatiques.

4. Procédé selon les revendications 1 ou 2, **caractérisé en ce qu'**on utilise comme monomères insaturés de l'acide acrylique, de l'acide méthacrylique ou leurs dérivés.

5. Procédé selon les revendications 1 à 4, **caractérisé en ce que** la préparation des polymères s'effectue à l'aide d'un composé organométallique.

6. Procédé selon les revendications 1 à 5, **caractérisé en ce que** les polymères obtenus sont soumis à une autre étape de polymérisation, dans laquelle d'autres monomères sont greffés aux polymères.

7. Procédé selon la revendication 6, **caractérisé en ce que** les autres monomères, lesquels sont greffés au polymère, sont ajoutés avant le moment où le gonflement obtenu est mélangé, avec les émulsionnants, à l'eau.

8. Procédé selon les revendications 1 à 7, dans lequel le gonflement obtenu est mélangé, avec les émulsionnants, ainsi que d'autres polymères, charges, adjuvants et pigments, à de l'eau.

9. Procédé selon les revendications 6 à 8, **caractérisé en ce que** le gonflement obtenu est mélangé à des émulsionnants ainsi que des vecteurs de compatibilité, lesquels améliorent la morphologie entre les polymères et d'autres substances également ajoutées, et à de l'eau.

10. Procédé selon les revendications 6 à 9, **caractérisé en ce qu'**un tel agent de compatibilité est choisi, lequel modifie la morphologie entre les polymères obtenus et les monomères greffés.

11. Procédé selon les revendications 6 à 10, **caractérisé en ce qu'**on utilise comme autres monomères, lesquels sont greffés au polymère, des monomères vinylaromatiques, de l'acrylonitrile ou du méthylméthacrylate.

12. Procédé selon les revendications 9 à 11, **caractérisé en ce que** les vecteurs de compatibilité sont ajoutés soit avant, soit pendant le moment où le gonflement obtenu est mélangé, avec les émulsionnants, à l'eau.
